Europäisches Patentamt

**European Patent Office**

Office européen des brevets

(11) Numéro de publication: **0 015 881**
**B1**

(12) **FASCICULE DE BREVET EUROPEEN**

(45) Date de publication du fascicule du brevet:
**01.02.84**

(21) Numéro de dépôt: **80810078.8**

(22) Date de dépôt: **04.03.80**

(51) Int. Cl.³: **A 01 B 19/06**

(54) **Appareil pour la préparation du sol.**

(30) Priorité: **06.03.79 CH 2148/79**

(43) Date de publication de la demande:
**17.09.80 Bulletin 80/19**

(45) Mention de la délivrance du brevet:
**01.02.84 Bulletin 84/5**

(84) Etats contractants désignés:
**AT BE DE FR GB IT NL**

(56) Documents cités:
**AT - B - 293 079
CH - A - 404 275
CH - A - 425 306
DE - A - 1 943 011
FR - A - 1 308 664
FR - A - 1 554 614**

(73) Titulaire: **Chauvet, Robert, CH-1111 Saint Saphorin
s/Morges (CH)**

㉒ Inventeur· **Chauvet, Robert, CH-1111 Saint Saphorin
s/Morges (CH)**

(74) Mandataire: **Ardin, Pierre et al, PIERRE ARDIN &
CIE 22, rue du Mont-Blanc, CH-1211 Genève 1 (CH)**

BUNDESDRUCKEREI BERLIN

Appareil pour la préparation du sol

L'invention a pour objet un appareil pour la préparation du sol, destiné à être attelé à un tracteur agricole, comprenant au moins deux rangées parallèles de barres à dents chaque rangée comportant deux barres montées l'une dans le prolongement de l'autre, perpendiculairement au sens de marche du tracteur, et actionnées par un dispositif à bielles et excentriques relié à la prise de force du tracteur, les excentriques du dispositif actionnant les barres à dents d'une même rangée étant décalés l'un par rapport à l'autre de façon à lesdites barres déplacer en sens contraire dans le prolongement l'une de l'autre.

Par le brevet français N° 1 554 614, on connaît déjà une herse susceptible d'être actionnée par la prise de force d'un tracteur. Les deux barres à dents de cette herse sont disposées dans le prolongement l'une de l'autre, perpendiculairement aus sens de marche du tracteur et actionnées de façon à se déplacer en sens contraire l'une par rapport à l'autre. Les barres à dents se trouvent ainsi simultanément à leur point mort intérieur ou extérieur et les excentriques subissent des chocs qu'ils transmettent à l'arbre d'entraînement tendant notamment à détériorer les cardans de l'arbre.

Par le brevet suisse N° 404 275, on connaît une herse comportant deux barres à dents disposées l'une derrière l'autre perpendiculairement au sens de marche du tracteur, les excentriques actionnant ces deux barres à dents étant décalés de 100°. Cet assemblage est peu stable et se déséquilibre lorsque les deux rangées de barres à dents se déplacent temporairement dans le même sens.

Pour remédier aux inconvénients de ces dispositifs connus, l'appareil selon l'invention est caractérisé en ce que les excentriques du dispositif actionnant une rangée adjacente de barres à dents sont décalés angulairement par rapport aux excentriques actionnant la rangée précédente, de façon que les barres à dents de cette dernière se trouvent sensiblement à mi-course lorsque les barres à dents de la rangée adjacente se trouvent en fin de course vers l'extérieur ou vers l'intérieur, les barres en regard l'une de l'autre des différentes rangées se déplaçant ainsi sur une partie de leur course dans le même sens et sur l'autre partie de leur course en sens opposé.

Du fait que l'appareil selon l'invention prévoit un décalage angulaire des excentriques actionnant chaque rangée de barres à dents, il résulte, dans le cas d'une herse à deux rangées, que lorsque les barres à dents de l'une des rangées se trouvent en fin de course, vers l'intérieur ou vers l'extérieur, les barres à dents de l'autre rangée se trouvent à mi-course, soit vers l'intérieur, soit vers l'extérieur, et assurent de ce fait un équilibrage amélioré du châssis de la herse.

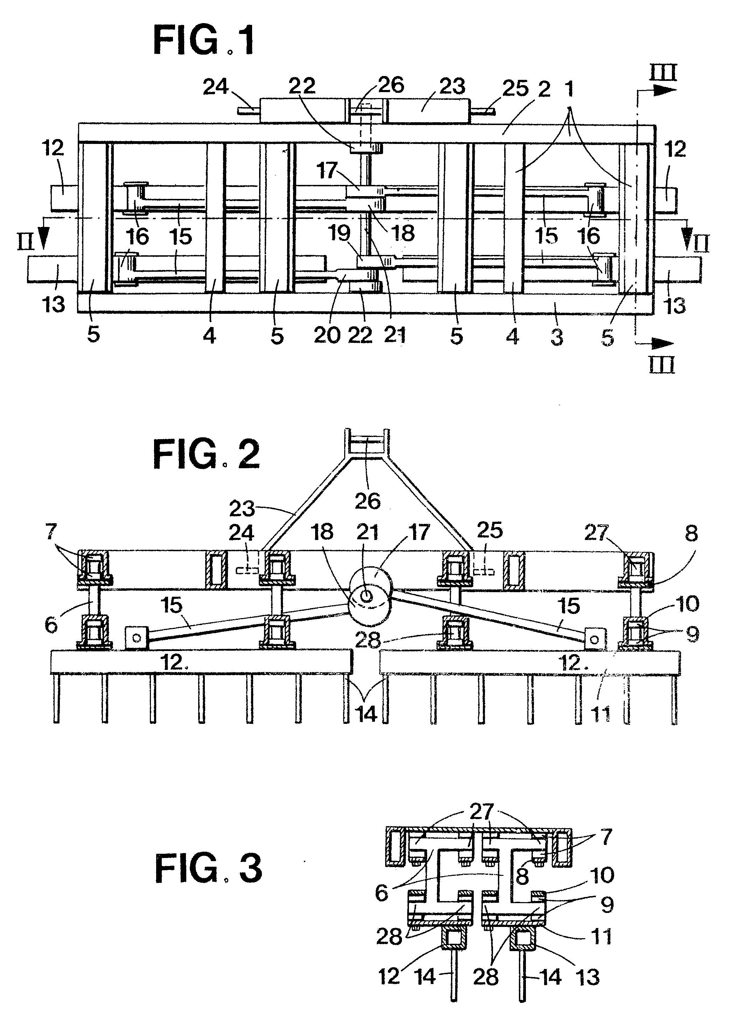

Les figures 1, 2 et 3 du dessin annexé représentent, à titre d'exemple, une forme d'exécution de l'objet de l'invention.

La figure 1 en est une vue de dessus en plan;

la figure 2 en est une vue en coupe longitudinale selon II-II de la figure 1;

la figure 3 en est une vue partielle en coupe transversale selon III-III de la figure 1.

L'appareil représenté comprend un bâti 1, composé de quatre tubes métalliques de section rectangulaire 2, 3 et 4 et de quatre profils de tôle en double Z5, assemblés par soudage. Dans chaque profil en double Z5 sont montés deux bras oscillants 6 dont les pivots carrés supérieurs 27 sont maintenus entre deux bandes de matière élastique 7 par des plaques 8, boulonnées contre lesdits profils doubles Z5.

Les pivots carrés 28 des extrémités inférieures des bras oscillants 6 sont fixés entre des bandes de matière élastique 9 par des étriers 10 boulonnés sur des plaques 11 solidaires des barres 12 et 13 portant chacune une rangée de dents 14 destinées à pénétrer dans le sol.

Chaque pivot (27, 28) de section transversale quadrangulaire est orienté de façon que deux de ses faces latérales opposées soient soumises à un effort radial de rappel pendant le travail.

Quatre bielles 15 reliées aux barres à dents 12 et 13 par des blocs amortisseurs 16 impriment auxdites barres un mouvement alternatif par l'action de quatre excentriques 17, 18, 19 et 20 fixés sur un arbre 21 pouvant être accouplé par un arbre à cardans, non représenté, à la prise de force arrière d'un tracteur. L'arbre 21 est monté dans deux paliers 22 fixés au bâti 1. Les excentriques 17 et 18 sont calés sur l'arbre 21 de façon que les barres à dents frontales 12 oscillent d'un mouvement alternatif et toujours l'une dans le sens opposé de l'autre. Il en est de même pour les excentriques 19 et 20 et pour les barres à dents arrières 13, mais avec un décalage angulaire de 90° sur l'arbre 21, par rapport aux excentriques 17 et 18 de façon que les barres arrières soient chacune dans son point mort extérieur quand les barres frontales sont à mi-chemin d'une course.

Le bâti 1 porte un chevalet 23 muni de trois axes d'assemblage 24, 25 et 26 destinés à être fixés sur l'attelage en trois points d'un tracteur agricole.

**Revendications**

1. Appareil pour la préparation du sol, destiné à être attelé à un tracteur agricole, comprenant au moins deux rangées parallèles de barres à dents chaque rangée comportant deux barres (12, 13) montées l'une dans le prolongement de l'autre, perpendiculairement au sens de marche du tracteur, et actionnées chacune par un dispositif à bielles (15) et excentriques (17—20) relié à la prise de force du tracteur, les excentriques (17, 18 ou 19, 20) du dispositif actionnant les barres à dents (12 ou 13) d'une même rangée étant décalés l'un par rapport à l'autre de façon à déplacer lesdites barres en sens contraire dans le prolongement l'une de l'autre, caractérisé en ce que les excentriques (19, 20) du dispositif actionnant une rangée adjacente de barres à dents (13) sont décalés angulairement par rapport aux excentriques (17, 18) actionnant la rangée précédente, de façon que les barres à dents (13) de cette dernière se trouvent sensiblement à mi-course lorsque les barres à dents (12) de la rangée adjacente se trouvent en fin de course vers l'extérieur ou vers l'intérieur, les barres (12, 13) en regard l'une de l'autre des différentes rangées se déplaçant ainsi sur une partie de leur course dans le même sens et sur l'autre partie de leur course en sens opposé.

2. Appareil selon la revendication 1, caractérisé en ce qu'il comprend des supports mobiles (6) pour les barres à dents (12, 13) pourvus chacun de pivots (27, 28) de section transversale quadrangulaire montés dans des paliers élastiques (7, 9), et en ce que chaque pivot (27, 28) de section transversale quadrangulaire est orienté de façon que deux de ses faces latérales opposées soient soumises à un effort radial de rappel pendant le travail.

3. Appareil selon les revendications 1 et 2, caractérisé par le fait que les faces latérales des pivots quadrangulaires (27, 28) soumises à l'effort radial sont maintenues en place par des bandes de matière élastique (7, 9) serrées entre deux plaques d'appui (5, 8) ou (10, 11).

## Patentansprüche

1. Bodenbearbeitungsgerät, bestimmt zum Ankoppeln an einen Landwirtschaftstraktor, bestehend aus zumindest zwei parallelen Reihen von Zinkenstangen (12, 13), wobei jede dieser Reihen zwei in der gegenseitigen Verlängerung ihrer Längsrichtung nebeneinander und zur Fahrrichtung des Traktors senkrecht angeordnete Zinkenstangen (12, 13) umfaßt, von welchen Reihen jede mittels einer aus Schubstangen (15) und Exzentern (17–20) bestehenden Vorrichtung angetrieben wird, wobei diese Exzenter (17, 18 oder 19, 20) einer die Zinkenstangen (12 oder 13) derselben Reihe antreibenden Vorrichtung in der Weise versetzt sind, daß sie die Zinkenstangen (12 oder 13) in ihrer gegenseitigen Verlängerungsrichtung in entgegengesetztem Sinne bewegen, dadurch gekennzeichnet, daß die Exzenter (19, 20) von einer eine anliegende Reihe von Zinkenstangen (13) antreibenden Vorrichtung gegenüber den die vorhergehende Reihe antreibenden Exzentern (17, 18) winkelmäßig so versetzt sind, daß die Zinkenstangen (13) der letzteren Reihe sich merklich bei halbem Gang befinden, wenn die Zinkenstangen (12) der anliegenden Reihe sich gegen außen oder innen hin am Gangende befinden, wobei die sich gegenüberliegenden Zinkenstangen (12, 13) von verschiedenen Reihen sich auf einem Teil ihres Ganges in derselben Richtung und auf dem anderen Teil ihres Ganges in entgegengesetzter Richtung bewegen.

2. Gerät nach Anspruch 1, dadurch gekennzeichnet, daß es bewegliche Träger (6) für die Zinkenstangen (12, 13) aufweist, von welchen Trägern jeder mit viereckigem Querschnitt versehene und in elastischen Zapfenlagern (7, 9) gelagerte Zapfen (27, 28) besitzt, und daß jeder mit viereckigem Querschnitt versehene Zapfen (27, 28) in der Weise orientiert ist, daß zwei seiner sich gegenüberliegenden Seitenflächen während der Arbeit einer radialen Rückzugsbeanspruchung ausgesetzt sind.

3. Gerät nach den Ansprüchen 1 und 2, durch die Tatsache gekennzeichnet, daß die beiden der radialen Beanspruchung ausgesetzten Seitenflächen der viereckigen Zapfen (27, 28) von zwischen zwei Stützplatten (5, 8) oder (10, 11) festgeklemmten elastischen Streifen (7, 9) festgehalten werden.

## Claims

1. Soil working implement adapted to be attached to an agricultural tractor, comprising at least two parallel rows of toothed bars, each row comprising two bars (12, 13) mounted each in the prolongation of the other one, perpendicularly to the path of travel of the tractor and actuated each by means of rods (15) and eccentrics (17–20) connected to the power take-off means of the tractor, the eccentrics (17, 18 or 19, 20) of the means actuating the toothed bars (12 or 13) of a given row being set off with respect to the other one, so as to displace such bars in opposite direction in the prolongation of each other, characterized in that the eccentrics (19, 20) of the means actuating an adjacent row of toothed bars (13) are set off angularly with respect to eccentrics (17, 18) actuating the first mentioned row, so that the toothed bars (13) of the latter are substantially at half-stroke while the toothed bars (12) of the adjacent row are at the end of their stroke towards the outside or towards the inside, the bars (12, 13) opposite one another of different rows being thus displaced during a portion of their travel in the same direction and during the other portion of their travel in an opposite direction.

2. Implement according to claim 1, characterized in that it comprises movable supports (6) for toothed bars (12, 13) provided each with pivots (27, 28) of quadrangular transverse cross-section, mounted on resilient bearings (7, 9) and in that each pivot (27, 28) of quadrangular transverse cross-section is oriented so that two of its opposite lateral forces are subjected to a radial repelling force during operation.

3. Implement according to claims 1 and 2, characterized in that the lateral faces of quadrangular pivots (27, 28) subjected to a radial force are kept in place by bands of resiliant material (7, 9) pressed between two beams (5, 8) or (10, 11).

# FIG.1

# FIG.2

# FIG.3